# EUROPEAN PATENT APPLICATION

(11) **EP 0 607 052 A2**
(43) Date of publication of application: **20.07.1994**
(21) Application number: 94300263.4
(22) Date of filing: 14.01.1994
(51) Int. Cl.: F16L 55/162, F28F 11/02

(54) **Method and apparatus of effecting a repair to a metal tube**

(30) Priority: 15.01.1993 GB 9300762
(71) Applicant: BABCOCK CONSTRUCTION LIMITED, Amersham, Bucks HP7 0DD (GB)
(72) Inventor: Hamilton, Malcolm, Kinver, South Staffordshire DY7 6LE (GB); Cairns, Gordon David, Wolverhampton, West Midlands WV11 2DG (GB)
(74) Representative: Lewis, David Overington

(57) **Abstract**

Repair of an otherwise inaccessible tube in a tube bank formed with return bends is initiated by cutting out a return bend on the failed tube 2. A spool body having sliding seals and positioned on a hollow conduit connected to a source of air at superatmospheric pressure is moved along within the tube from the opened end to determine the site of a failure 6. (Fig 2) A repair sleeve 36 is then positioned in register with the failure 6 again from the opened end and located between a hollow conduit 60 and an expander olive 52 carried on a rod 54 extending within the conduit 60. The sleeve 36 is a sliding fit within the tube and has externally serrated end portions 38,40 and a central portion 42, with the internal diameter of the central portion being greater than that of the end portions. The expander olive 52 is then pulled through the sleeve 36 to expand the end portions 38,40 into impervious contact with the tube 2 and effect a repair, the expander olive 52, rod 54 and conduit 60 removed and the return bend replaced.

## Description

This invention relates to a method of, and apparatus for, repairing a metal tube having a defective tube wall and, more particularly, a method of, and apparatus for, repairing a leaking heat exchanger tube.

Whilst some heat exchanger tubes are readily accessible and either may be repaired in situ by welding or may be removed and replaced, in some configurations such as in which heat exchange tubes are provided with circumferential fins and arranged in banks with tube lengths connected by return bends, it may be difficult either to obtain access to a site of a failure or to remove an individual tube length.

EP - A - 161780 discloses apparatus and method of repairing a damaged tube adjacent a tube sheet in a heat exchanger. A repair sleeve inserted into a damaged tube extends from the tube end to the site of the failure and is radially expanded into contact with the tube by draw means positioned at either end of the tube.

According to one aspect of the present invention there is provided a method of effecting a repair to a metal tube subject to a localised failure including locating the site of the failure, inserting a sleeve into the tube, and positioning the sleeve in register with the site of the failure, wherein a portion of the tube is removed to gain access to the interior of the tube through a thereby opened end, the sleeve is progressively radially expanded into the wall of the tube from one end thereof to the other end thereof to form an impervious connection between the tube and the sleeve overlaying the site of the failure and the portion of the- tube removed to gain access then replaced.

Preferably, the site of the failure is determined by inserting into the tube through the opened end, a spool body having end shoulders slidably and sealingly engageable with the interior of the tube and a source of superatmospherically pressurised gas discharging intermediate the end shoulders, moving the spool body axially within the tube and observing the positions of the spool body upon changes in pressure of the pressurised gas being registered.

Desirably, the sleeve is inserted positioned on a rod carrying an expander olive, the expander olive adjoining an end of the sleeve remote from the opened end of the tube, the sleeve is located in register with the site of the failure and the expander olive is drawn through the sleeve to expand the sleeve to form the impervious connection between the sleeve and the tube.

In another aspect of the invention, there is provided apparatus for effecting a repair to a metal tube subject to a localised failure wherein a series of rod lengths and/or conduit lengths having end portions are connectable together to form a support assembly insertable into the tube, first and second head assemblies are arranged alternatively to be mounted on the support assembly for insertion into the tube, with the first head assembly comprising a spool body having end shoulders provided with seals connecting with the inner surface of the tube and a passage connecting a space formed between the end shoulders of the spool, a core of the spool and the inner surface of the tube with a duct extending internally of the support assembly, and the second head assembly comprises a sleeve making a sliding fit with the inner surface of the tube and an expander olive located on the support assembly to position the sleeve intermediate the expander olive and an end of the support assembly, the duct being connectable to a pressure gauge and a source of pressurized gas when the first head assembly is mounted on the support assembly and the support assembly being actuable to draw the expander olive through the sleeve, radially to expand the sleeve into impervious contact with the inner surface of the tube when the second head assembly is mounted on the support assembly.

Preferably, the sleeve is formed with external circumferentially grooved or serrated outer end portions and a central portion intermediate the outer end portions of greater internal diameter than the internal diameter of the outer end portions, such that the expander olive is a force fit in the outer end portions and a sliding fit within the central portion.

The invention will now be described, by way of example, with reference to the accompanying, partly diagrammatic drawings, in which:-
Figure 1 is partly cross sectioned side elevation of portions of a circumferentially finned tube as positioned in a bank of tubes, the remaining tubes of which have been omitted for the sake of clarity, together with a first head assembly positioned within the tube; and
Figure 2 is a cross-sectional side elevation of a failed portion of the tube, with the circumferential fins omitted and a second head assembly positioned within the tube portion.

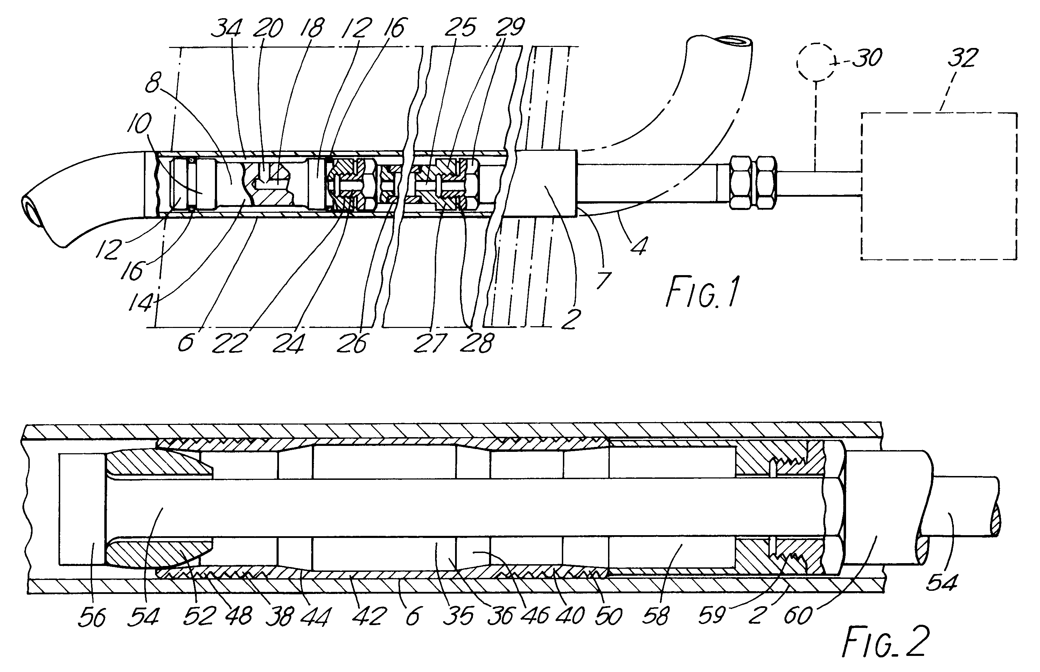

Figure 1 shows portions of a finned tube length 2 forming part of a sinuous tube bank of a heat exchanger (not shown) in which the tube lengths are connected by return bends 4. Should the tube length become subject to a localised failure 6, and it is impractical to remove the tube length from the bank, having located the failed tube length the associated return bend 4 is cut off in order to obtain access to the interior of the tube through a thereby opened end 7. In order to determine the axial location of the failure 6, a first head assembly 8 is inserted into the tube length. As shown in Figure 1, the first head assembly includes a spool body 10 having end shoulders 12 and a core 14. The end shoulders are each circumferentially grooved and provided with lubricated 0-ring seals 16 co-acting with the interior surface of the tube length 2 to form sliding gas seals. The core 14 is formed with a central bore 18 and inter-connecting radial bore 20, the central bore being formed with an enlarged threaded portion 22 to receive a male threaded connector 24 positioned on a hollow conduit length 26 carrying a female connector 27 at the end remote from the male connector. Additional hollow conduit lengths 26 are added, by means of co-acting threaded end connectors, as necessary, to form a pressurised gas duct 25. Washers 28 are positioned intermediate the connectors 24, 27 to limit leakage of gas from the conduit. The connectors 24, 27 are formed with hexagonal cross-section end portions 29 modified by rounding-off arrises at intersections of faces such that whilst the faces will form a seating for a spanner, the connectors are a sliding fit within the tube length 2 to support the hollow conduit length 26 when within the tube length 2. A pressure gauge 30 and source 32 of air at a pressure of 2 bar are connected to the interior of the outermost hollow conduit length.

In use, to locate the position of the failure 6, the spool body 10 is inserted into the relevant tube length 2 mounted on a hollow conduit length 26, with additional hollow conduit lengths being added as necessary. The pressure gauge 30 and source 32 are connected to the outermost hollow rod length and with the source 32 energised the spool body 10 moved along the tube length 4 until a pressure drop is indicated on the pressure gauge 30, indicating escape of the pressurised air through the central bore 18, radial bore 20, space 34 intermediate the core 14, end flanges 12 and interior surface of the tube length 2 and the failure 6. Further movement of the spool body in the same direction until a pressure rise is indicated enables the extent and centre of the failure 6 to be determined. For completeness, the spool body 10 is traversed over the length of the tube length 2 to detect any further failures. Conveniently, markings may be made on the respective conduit length or connector in register with the opened end 7 of the tube length to record the position of the failure with respect to the support conduit before removal of the first head assembly and the associated hollow conduit lengths from the tube length.

As shown in Figure 2, a second head assembly 35 including a sleeve 36 of the same material composition as the tube length 2, is then inserted into the tube length to register with the failure 6.

The sleeve 36 includes externally serrated outer end portions 38, 40 and a central portion 42 all having an outer diameter making a sliding fit within the tube length. The internal diameter of the sleeve is stepped and is greater over the central portion 42 than over the outer end portions 38, 40. Transition zones 44,46 at the junctions of the central portion and the end portions are formed with a shallow angle taper, as are outermost zones 48,50 of the outer end portions 38,40. An expander olive 52 having the form of a frustum of an oblate spheroid having curved tapers at leading and trailing ends is mounted freely on a rod length 54 against a collar 56 smoothly formed at the end of the rod and co-acting with a recessed face on the olive 52. The olive has a major diameter greater than the internal diameter of the outer end portions 38,40 of the sleeve 36 but slightly less than the internal diameter of the central portion 42. A recessed coupling 58 is provided on the rod 54 adjacent to the end portion 40 and is of dimensions sufficient to accommodate the olive 52. The coupling is formed with a threaded bore 59 for effecting connections to further support conduit lengths 60 similar to the support conduit lengths 26 utilised and marked when determining the position of the failure.

In use, having determined the position of a failure 6 and removed the first head assembly 8 from the tube length, the failure 6 is inspected by means of a fibrescope. If the failure is amenable to repair, a sleeve 36 of appropriate outer diameter and length is mounted together with the expander olive 52 on the rod length 54, and urged against the collar 56 by means of the further support conduit lengths 60 to form the second head assembly 35. The second head assembly is then inserted through the opened end 7 of the tube length by an appropriate distance so as to position the sleeve 36 to overlie the failure. This position is determined by means of the marks made on the support conduit lengths utilised in conjunction with the first head assembly, due allowance being made for any difference in length and spacing between the spool body 10 and the sleeve 36. Holding the sleeve 36 against initial axial movement by means of the recessed coupling 58 and the support conduit lengths 60, the expander olive 52 is then drawn through the sleeve on the rod length 54 utilising a pneumatic, hydraulic or mechanical jack (not shown). As the expander olive passes through the outer end portions 38, 40 the respective portions of the wall of the sleeve are expanded radially outwardly and urged into impervious contact with adjacent interior wall surfaces of the tube length, the tapers on the respective outermost zone 48 and the transition zone 46 facilitating the initial progress of the expander olive into the respective outer end portions 38, 40 and the circumferential serrations on the outer end portions facilitating an initial connection between the sleeve and the tube length.

Following completion of the passage of the expander olive 52 through the sleeve, the expander olive is accommodated in the recessed coupling 58 and is then removed from the tube length 2 together with the rod length 54 and the support conduit lengths 60. The return bend is then replaced and welded in position and the tube bank pressure tested to confirm the integrity of the repair.

It will be appreciated that by utilising a sleeve 36 of the same material composition as that of the tube length 2, no problems are likely to arise as regards compatibility of material or differential thermal expansion. However, on occasion, so long as compatibility of-the two materials is assured, it may be convenient to use a sleeve of material composition different from that of the tube length so long as the co-efficient of thermal expansion of the sleeve material is the same as, or greater than, that of the tube length.

To avoid assembly errors it is convenient to form both of the outermost zones 48, 50 and both of the transition zones 44, 46 with entry tapers such that the initial progress of the expander olive 52 is facilitated regardless of the orientation of the sleeve.

It will further be appreciated that other configurations of the first head assembly and the arrangement of hollow support conduits may be used. Thus the internal diameter of the hollow conduit lengths 28 may be sufficient to accommodate the rod length 54 of the second head assembly, thereby enabling the hollow rod lengths 28 to be utilised instead of the support conduit lengths 60 in conjunction with the second head assembly.

## Claims

1. A method of effecting a repair to a metal tube (2) subject to a localised failure including locating the site of the failure (6), inserting a sleeve (36) into the tube (2), and positioning the sleeve (36) in register with the site of the failure (6), characterised in that a portion (4) of the tube (2) is removed to gain access to the interior of the tube (2) through a thereby opened end (7), the sleeve (36) is progressively radially expanded into the wall of the tube (2) from one end thereof to the other end thereof to form an impervious connection between the tube (2) and the sleeve (36) overlaying the site of the failure (6) and the portion (4) of the tube removed to gain access then replaced.

2. A method as claimed in Claim 1, characterised in that the site of the failure (6) is determined by inserting into the tube (2) through the opened end (7) a spool body (10) having end shoulders (12) slidably and sealingly engageable with the interior of the tube and a source (32) of superatmospherically pressurised gas discharging intermediate the end shoulders (12), moving the spool body (10) axially within the tube (2) and observing the positions of the spool body (10) upon changes in pressure of the pressurised gas being registered.

3. A method as claimed in Claim 1 or Claim 2, characterised in that the sleeve (36) is inserted positioned on a rod (54) carrying an expander olive (52), the expander olive (52) adjoining an end (38) of the sleeve (36) remote from the opened end (7) of the tube (2), the sleeve (36) is located in register with the site of the failure (6) and the expander olive (52) is drawn through the sleeve (36) to expand the sleeve (36) to form the impervious connection between the sleeve (36) and the tube (2).

4. Apparatus for effecting a repair to a metal tube (2) subject to a localised failure (6), characterised in that a series of rod lengths (54) and/or conduit lengths (26,60) having end portions (24,27) are connectable together to form a support assembly insertable into the tube (2), first and second head assemblies (8,35) are arranged alternatively to be mounted on the support assembly for insertion into the tube (2), with the first head assembly (8) comprising a spool body (10) having end shoulders (12) provided with seals (16) connecting with the inner surface of the tube (2) and a passage (18,20) connecting a space formed between the end shoulders (12) of the spool (10), a core (14) of the spool and the inner surface of the tube (2) with a duct (25) extending internally of the support assembly (26), and the second head assembly (35) comprises a sleeve (36) making a sliding fit with the inner surface of the tube (2) and an expander olive (52) located on the support assembly to position the sleeve (36) intermediate the expander olive and an end of the support assembly (54,58,60), the duct (25) being connectable to a pressure gauge (30) and a source (32) of pressurized gas when the first head assembly (8) is mounted on the support assembly (26) and the support assembly (54,58,60) being actuable to draw the expander olive (52) through the sleeve (36), radially to expand the sleeve (36) into impervious contact with the inner surface of the tube when the second head assembly (35) is mounted on the support assembly (54,58,60).

5. Apparatus as claimed in Claim 4, characterised in that the sleeve (36) is formed with external circumferentially grooved or serrated outer end portions (38,40) and a central portion (42) intermediate the outer end portions (38,40) of greater internal diameter than the internal diameter of the outer end portions (38,40), such that the expander olive (52) is a force fit in the outer end portions (38,40) and a sliding fit within the central portion (42).

6. Apparatus as claimed in Claim 4 or Claim 5, characterised in that the interior of the sleeve (36) is formed with tapered portions (44,46,48,50) at entry to at least one of the outer end portions and at a transition between the central portion and the other outer end portion to facilitate entry of the expander olive (52) into the respective outer end portion.

7. Apparatus as claimed in Claim 4, Claim 5 or Claim 6, characterised in that the expander olive (52) is formed as a frustum of an oblate spheroid with a curved taper on a leading portion and a trailing portion, a central portion being of a diameter to effect full expansion of the sleeve (36) into impervious contact with the tube length (2).
